# FASCICULE DE BREVET EUROPEEN

(11) **EP 3 210 652 B1**
(45) Date de publication et mention de la délivrance du brevet: **14.11.2018**
(21) Numéro de dépôt: 17157650.7
(22) Date de dépôt: 23.02.2017
(51) Int. Cl.: A62C 13/78

(54) **SUPPORT DE FIXATION D'UN EXTINCTEUR PORTATIF**
BEFESTIGUNGSHALTERUNG EINES TRAGBAREN FEUERLÖSCHERS
HOLDER FOR ATTACHING A PORTABLE FIRE EXTINGUISHER

(30) Priorité: 25.02.2016 FR 1651564
(43) Date de publication de la demande: 30.08.2017
(73) Titulaire: Rome Equipements, 67800 Bischheim (FR)
(72) Inventeur: MOSCHEROSCH, Patrick, 67116 Reichstett (FR)
(74) Mandataire: Regimbeau

(56) Documents cités:
- GB-A- 1 222 366
- JP-A- H09 271 525
- KR-A- 20120 134 897
- US-A1- 2011 192 810

## Description

### DOMAINE DE L'INVENTION

L'invention concerne le domaine de la sécurité incendie et plus particulièrement des supports permettant de fixer ces extincteurs portatifs.

### ARRIERE-PLAN TECHNOLOGIQUE

Un extincteur portatif est un appareil de lutte contre l'incendie capable de projeter ou de répandre une substance appropriée - appelée « agent extincteur » - afin d'éteindre un début d'incendie, qui est conçu pour être porté et utilisé à la main. Un tel extincteur présente une masse inférieure ou égale à vingt kilogrammes.

Sur le marché français, il existe actuellement plus d'une cinquantaine de modèles d'extincteurs portatifs de taille et de contenu différents. Les extincteurs portatifs peuvent en effet avoir un poids compris entre environ 6 kilogrammes et une vingtaine de kilogrammes et contenir de l'eau additionnée d'un additif, des poudres polyvalentes ou encore du dioxyde de carbone (CO₂).

Chacun de ces extincteurs portatifs doit comprendre un crochet de fixation qui lui est associé. L'extincteur portatif est alors certifié en combinaison avec son crochet de fixation, qui ne peut par conséquent pas être modifié lors de son installation.

Les extincteurs peuvent notamment être posés au sol sur des bardages ou fixés à l'aide de leur support sur un pilier métallique du type IPN (pour Poutrelle en I à Profil Normal). Un même site peut d'ailleurs comprendre plusieurs types d'extincteurs portatifs différents (ayant des dimensions, un poids, un contenu et/ou des marques/origines différents), comprenant chacun un crochet de fixation distinct. GB1222366 divulgue un support de fixation, adapté pour fixation des plusieurs types d'extincteurs différents.

Afin de permettre la fixation de ces extincteurs portatifs à des piliers métalliques sans perçage, des supports de fixation magnétiques comprenant un crochet en U fixé sur des plaques aimantées ont été proposés. Toutefois, ces supports ne sont pas universels dans la mesure où ils ne sont pas adaptés pour permettre la fixation de tout type d'extincteur portatif, indépendamment de la forme de son crochet. De plus, ces supports ne sont pas capables de fixer de manière fiable les extincteurs les plus lourds, en particulier lorsque le pilier métallique comporte plusieurs couches de peinture successives qui réduisent la force d'adhérence des supports. Il est donc souvent nécessaire de rapporter en plus des brides de maintien afin de renforcer la fixation des plaques sur le pilier et de limiter les risques de décollement. En outre, à l'usage, les crochets en U de ces plaques ont tendance à se déformer et donc de moins bien fixer l'extincteur. Enfin, les plaques mises en oeuvre présentent de grande dimension (généralement 300 mm x 400 mm ou 160 mm x 500 mm) qui, en plus de ne pas être esthétiques, sont parfois difficiles à fixer sur le mur métallique choisi en raison de leur fort encombrement.

Il a également été proposé de fixer le crochet par perçage directement dans le pilier métallique. Un tel perçage n'est cependant pas recommandé est peut être interdit selon les pays afin de ne pas modifier la structure du pilier (IPN) et sa résistance mécanique. Qui plus est, un tel perçage implique une perte de temps non négligeable et donc augmente le coût de pose de l'extincteur.

Enfin, il est habituellement fortement déconseillé de fixer les crochets sur un bardage isolant. Ces bardages ont en effet généralement une épaisseur comprise entre 0.50 et 0.88 mm de sorte que le vissage des crochets dans ces bardages à l'aide de vis auto-taraudeuses ne permet pas de tenir dans le temps l'extincteur.

### RESUME DE L'INVENTION

Un objectif de l'invention est donc de proposer un support de fixation pour un extincteur portatif qui soit capable de fixer un extincteur portatif contre un pilier métallique du type IPN indépendamment du nombre de couches de peinture susceptibles de recouvrir ledit pilier métallique et qui soit en outre peu encombrant et capable de coopérer avec tout type de crochet existant, quelle que soit la classe (à eau, à poudres ou à CO2), la taille, le poids ou l'origine de l'extincteur associé.

Pour cela, l'invention propose un support de fixation d'un extincteur portatif comprenant un crochet, ledit Support de fixation comprenant :
- un socle présentant une face avant configurée pour venir en contact avec le crochet de l'extincteur et une face arrière configurée pour venir en appui contre une paroi, et
- au moins un aimant permanent comprenant du néodyme, et
- une rainure, formée dans la face avant du socle et configurée pour coopérer avec le crochet de l'extincteur.

Certaines caractéristiques préférées mais non limitatives du support de fixation décrit ci-dessus sont les suivantes, prises individuellement ou en combinaison :
- le support de fixation comprend au moins deux aimants permanents comprenant du néodyme, par exemple entre deux et six,
- le socle présente la forme d'un disque,
- le socle présente une largeur maximale inférieure ou égale à 200 mm, de préférence inférieure ou égale à 160 mm, par exemple d'environ 155 mm,
- la rainure présente une section en T,
- la rainure est discontinue et comprend deux sous-parties disjointes,
- le socle est réalisé en matière plastique, typiquement en acrylonitrile butadiène styrène,
- le socle comprend en outre des nervures de rigidification, s'étendant depuis sa face arrière,
- le support de fixation comprend en outre au moins un aimant permanant comprenant des ferrites,
- le support de fixation comprend entre quatre et six aimants permanents comprenant du néodyme et pas d'aimant permanent comprenant des ferrites, ou quatre aimants permanents comprenant du néodyme et deux aimants permanents comprenant des ferrites.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :
La figure 1 est une vue en perspective de la face avant d'un exemple de réalisation d'un support de fixation pour extincteur portatif conforme à l'invention,
La figure 2 est une vue en perspective de la face arrière du support de fixation de la figure 1,

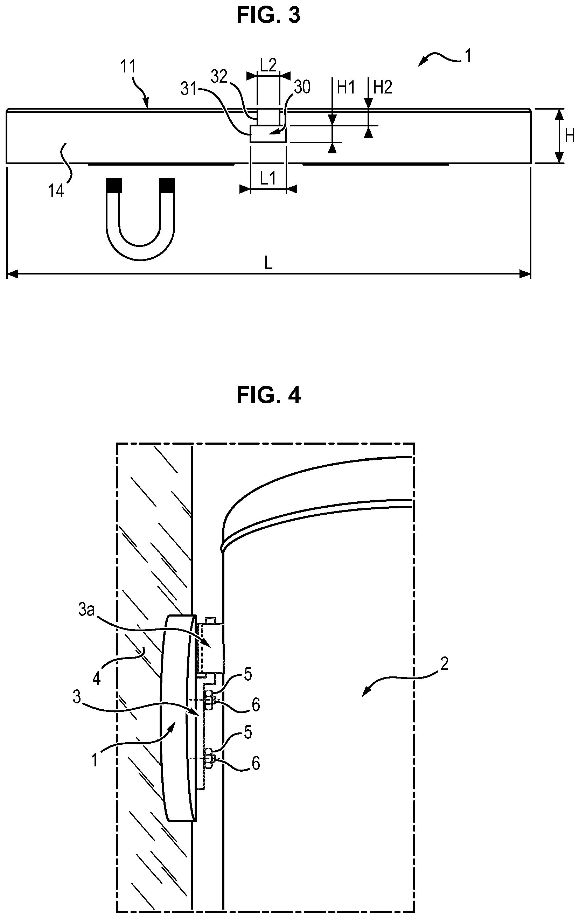

La figure 3 est une vue de côté du support de fixation de la figure 1, au niveau de la rainure,
La figure 4 est une vue de côté d'un exemple de réalisation d'un support de fixation d'un extincteur portatif selon l'invention, fixé sur un panneau métallique et sur lequel est accroché un exemple d'extincteur portatif.

### DESCRIPTION DETAILLEE D'UN MODE DE REALISATION

De manière connue en soi, un extincteur 2 portatif comprend un réservoir clos ayant une paroi supérieure qui présente une ouverture dont le contour a une forme générale circulaire, un ensemble à tube plongeur de forme générale cylindrique et une tête d'extincteur 2. Un système d'accrochage du type anneau ou encoche-accrochage 3a est en outre fixé solidairement sur l'extincteur 2 portatif, au niveau de la paroi supérieure du réservoir clos. Ce système d'accrochage est configuré pour coopérer avec un crochet 3, qui est certifié avec l'extincteur 2 associé.

Comme indiqué préalablement, il existe plusieurs type d'extincteurs 2 portatifs, qui peuvent chacun présenter une forme, une taille et un poids différents selon l'origine (la marque) de l'extincteur 2 et son contenu. De plus, les crochets 3 diffèrent d'un extincteur 2 à l'autre, leur seul point commun étant la présence de deux orifices traversants formés dans le crochet 3.

Ces orifices traversants présentent généralement un diamètre de l'ordre de 6.5 mm permettant le passage d'une vis du type M6. L'entraxe entre les orifices traversants varie cependant d'un crochet 3 à l'autre.

Afin de permettre la fixation de tout type d'extincteur 2 sur un panneau métallique 4 indépendamment de la forme du crochet 3 avec lequel il a été certifié, l'invention propose un support de fixation 1 comprenant :
- un socle 10 présentant une face avant 11 configurée pour venir en contact avec le crochet 3 de l'extincteur 2 et une face arrière 12 configurée pour venir en regard du panneau métallique 4,
- au moins un aimant permanent 20 comprenant du néodyme, et
- une rainure 30, formée dans la face avant 11 du socle 10 et configurée pour coopérer avec le crochet 3 de l'extincteur 2.

Par panneau métallique 4, on comprendra ici tout type de paroi comprenant au moins une zone métallique, typiquement un pilier métallique (IPN notamment), un mur (qui peut être un voile de béton) comprenant une plaque métallique intégrée ou rapportée, etc.

Une telle configuration permet ainsi, grâce à la mise en oeuvre d'aimants permanents 20 comprenant du néodyme, d'assurer une fixation effective et fiable de tout type d'extincteur 2 portatif sur un panneau 4 sans recourir à des perçages, et ce indépendamment du nombre de couches de peinture recouvrant ce panneau 4, tout en ayant un faible encombrement.

Le support de fixation 1 peut ne comprendre que des aimants comprenant du néodyme, ou en variante comprendre également un ou plusieurs aimants comprenant des ferrites.

Un exemple d'aimants permanents 20 comprenant du néodyme et pouvant être utilisé présente une force portante d'environ 26 kilogrammes et une force de cisaillement d'environ 7 kilogrammes par aimant 20, tandis qu'un exemple d'aimants permanents comprenant des ferrites et pouvant être utilisé présente une force portante d'environ 8 kilogrammes et une force de cisaillement d'environ 2,7 kilogrammes.

Les aimants permanents 20 comprenant du néodyme peuvent en outre comprendre du fer et du bore.

Le nombre et le type d'aimants permanents 20 fixés dans le support de fixation 1 sont choisis de manière à supporter, une fois assemblés dans le support de fixation 1, une force portante au moins égale à 80 kilogrammes et de préférence au moins 100 kilogrammes, et une force de cisaillement au moins égale à 25 kilogrammes, afin de garantir la fixation et le maintien de tout type d'extincteur 2, quel que soit le revêtement du panneau métallique 4.

Ainsi, dans un premier exemple de réalisation, le support de fixation 1 peut comprendre quatre aimants permanents 20 comprenant du néodyme et deux aimants permanents comprenant des ferrites. Ce premier exemple permet alors d'obtenir une force portante totale pour le support de fixation 1 d'environ 120 kilogrammes et une force de cisaillement totale d'environ 33 kilogrammes, lorsque les aimants permanents 20 décrits ci-avant sont utilisés (c'est-à-dire des aimants ayant une force portante et une force de cisaillement de 26 kg et 7 kg respectivement pour les aimants permanents 20 à base de néodyme et 8 kg et 2,7 kg respectivement pour les aimants permanents 20 à base de ferrites).

Dans un deuxième exemple de réalisation, le support de fixation 1 peut comprendre uniquement quatre aimants permanents 20 comprenant du néodyme. Ce deuxième exemple permet alors d'obtenir une force portante totale d'environ 104 kilogrammes et une force de cisaillement totale d'environ 28 kilogrammes, avec les aimants permanents 20 décrits ci-avant.

Dans un troisième exemple de réalisation, le support de fixation 1 peut comprendre uniquement six aimants permanents 20 comprenant du néodyme. Ce troisième exemple permet alors d'obtenir une force portante totale d'environ 156 kilogrammes et une force de cisaillement totale d'environ 42 kilogrammes, avec les aimants permanents 20 décrits ci-avant.

Par ailleurs, la rainure 30 permet, en combinaison avec un organe de fixation, la fixation de tout type de crochet 3 d'extincteur 2, que ce soit horizontalement ou verticalement, l'orientation de la fixation pouvant être modifiée en orientant simplement la rainure 30 dans la direction voulue lors de la fixation du support 1 contre un support 1 métallique.

Il suffit en effet d'introduire un organe de fixation tel qu'une vis 5 dans l'un des orifices traversants du crochet 3 puis d'insérer la tête de la vis 5 dans la rainure 30 et de la faire coulisser, avec le crochet 3, le long de la rainure 30 afin de connecter et de bloquer l'extincteur 2 sur le support de fixation 1. On rappellera en effet que tous les crochets 3 connus à ce jour comprennent deux orifices traversants.

Dans une forme de réalisation, une vis 5, par exemple du type M6 lorsque l'orifice du crochet 3 présente un diamètre égal à 6.5 mm environ, est introduite dans chaque orifice traversant et bloquée sur le crochet 3 à l'aide d'un écrou correspondant. Il suffit alors d'introduire chaque tête de vis dans la rainure 30 pour fixer l'extincteur 2 au support de fixation 1.

On notera que la rainure 30 permet ainsi, quel que soit l'entraxe entre les orifices traversants formés dans le crochet 3, de fixer ledit crochet 3 à l'aide de deux organes de fixation sur le support de fixation 1. La fixation d'un extincteur 2 sur le support de fixation 1 est donc simple, rapide et peu coûteuse, puisqu'elle ne nécessite que l'utilisation d'une ou deux vis 5 et d'autant de écrous 6 (ou toutes autres pièces équivalentes). Le support de fixation est en outre universel puisqu'il permet la fixation de tout type de crochet 3.

Dans une forme de réalisation, le socle 10 du support de fixation 1 présente une périphérie dont une largeur L maximale est inférieure à 200 mm, de préférence inférieure ou égale à 160 mm, par exemple de l'ordre de 155 mm. Par « largeur L » on comprendra ici la distance entre deux droites parallèles (ou « lignes d'appui) qui sont tangentes à la courbe fermée formée par la périphérie du socle 10 en deux points distincts. La largeur L maximale correspond alors à la plus grande largeur L de la périphérie.

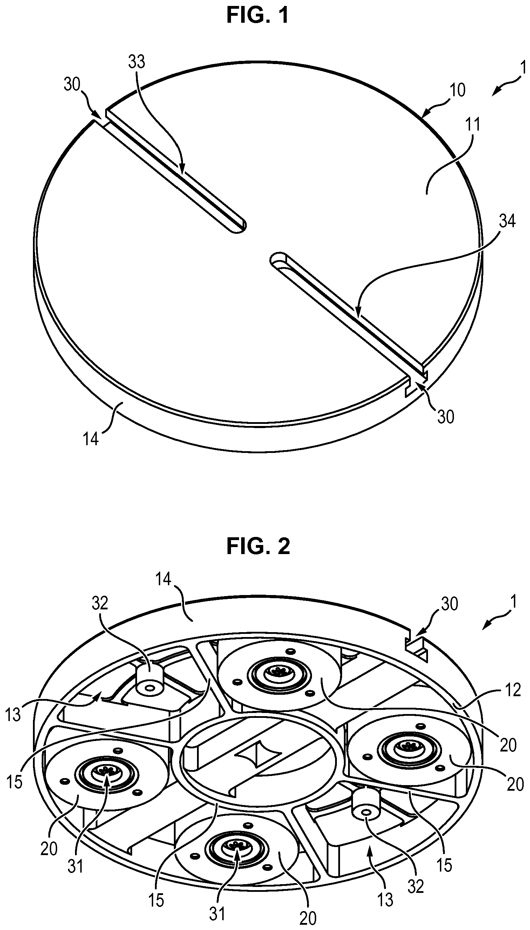

Dans un exemple de réalisation, la périphérie du socle 10 est globalement circulaire, la largeur L maximale étant alors égale au diamètre externe du cercle (voir Figure 1). En variante, la périphérie du socle 10 pourrait par exemple être carrée ou rectangulaire, la largeur L maximale correspondant alors à leur diagonale.

Une telle compacité du socle 10 est notamment permise par la mise en oeuvre d'aimants permanents 20 comprenant du néodyme, qui permettent d'obtenir une force portante très importante sur une faible surface de contact.

Avantageusement, un socle 10 présentant une largeur maximale L inférieure ou égale à 160 mm est alors globalement masqué par le réservoir de l'extincteur 2 portatif, lorsque celui-ci est fixé sur le support 1 via son crochet 3. Ainsi, non seulement le support de fixation 1 peut être placé sur tout panneau métallique 4 tant que l'encombrement de l'extincteur 2 portatif l'y autorise, mais en outre l'esthétique globale du support de fixation 1 et de l'extincteur 2 portatif est améliorée.

Le socle 10 peut être plein, auquel cas les aimants permanents 20 peuvent être fixé sur la face arrière 12 du socle 10 ou noyés dans la masse.

En variante, afin de réduire la quantité de matière nécessaire pour la réalisation du socle 10, son encombrement et son poids global, le socle 10 peut présenter des évidements 13 locaux configurés pour recevoir un ou plusieurs des aimants permanents 20.

Ces évidements 13 peuvent être borgnes et être formés dans la face arrière 12 du socle 10, de manière à laisser la face avant 11 lisse (en dehors de la rainure 30) et améliorer ainsi son rendu esthétique.

Par exemple, le socle 10 peut présenter une bordure périphérique 14, s'étendant sensiblement perpendiculairement depuis la face avant 11 en direction de la face arrière 12. La face avant 11 et la bordure périphérique 14 présentent alors une forme globale de cupule.

Des nervures 15 de renforcement du socle 10 peuvent alors être formées entre les faces 11, 12 du socle 10 et la bordure périphérique 14. Dans le cas d'un socle 10 en forme de disque, les nervures 15 peuvent par exemple s'étendre radialement depuis le centre du socle 10 vers la bordure périphérique 14. Les nervures 15 peuvent être rectilignes ou courbes. En variante ou en complément, le socle 10 peut en outre comprendre une nervure 15 centrale circulaire, coaxiale avec la bordure périphérique 14 et de laquelle s'étendent radialement des nervures 15.

Les nervures 15 définissent ainsi avec la bordure périphérique 14 et le cas échéant la nervure 15 centrale les évidements 13.

La hauteur H (distance entre la face avant 11 et la face arrière 12) du socle 10 dépend de l'épaisseur des aimants permanents 20 choisis et peut être comprise entre une dizaine de millimètres et une trentaine de millimètres. Par exemple, le socle 10 peut présenter une hauteur (à 5% près) de 16.5 mm. Une telle hauteur est typiquement envisageable pour un socle 10 circulaire ayant un diamètre inférieur ou égal à 200 mm.

La rainure 30 débouche dans la face avant 11 du socle 10. La face avant 11 et la face arrière 12 sont de préférence sensiblement planes afin de faciliter la fixation du support 1 sur une surface plane (telle qu'un mur ou un pilier) et le maintien d'un extincteur 2 portatif.

Dans une forme de réalisation, la rainure 30 présente une section transversale en T. En d'autres termes, le fond 31 de la rainure 30 est plus large que son embouchure 32. La section transversale du fond 31 de la rainure 30 et la section transversale de l'embouchure 32 de la rainure 30 peuvent être rectangulaire et/ou arrondies. La rainure 30 peut être symétrique.

La rainure 30 peut par exemple présenter (à 5% près) :
- au niveau du fond 31, une largeur L1 (dimension perpendiculaire à la direction d'extension de la rainure 30) d'environ 10.5 mm pour une profondeur H1 (dimension entre la face avant 11 et la face arrière 12) d'environ 5 mm,
- au niveau de l'embouchure 32, une largeur L2 d'environ 6.5 mm pour une profondeur H2 d'environ 5 mm.

Ces dimensions de rainure 30 peuvent notamment être mises en oeuvre pour un socle 10 présentant une épaisseur de 16.5 mm.

Une longueur (dimension selon la direction d'extension de la rainure 30) de la rainure 30 est alors comprise entre un tiers de la largeur maximale L du socle 10 et la largeur maximale L du socle 10.

Une extrémité de la rainure 30 est de préférence fermée afin de bloquer en translation la tête des vis 5 permettant de suspendre le crochet 3 d'un extincteur 2.

La rainure 30 peut être continue (c'est-à-dire en une seule partie) ou discontinue (c'est-à-dire en plusieurs parties).

Afin de faciliter l'introduction du crochet 3 de l'extincteur 2 portatif dans la rainure 30, la rainure 30 est de préférence débouchante sur la bordure périphérique 14 du socle 10. En variante, la rainure 30 peut également être borgne et ne pas déboucher sur la bordure périphérique 14 du socle 10, auquel cas une ouverture, plus large que la rainure 30, peut être prévue au niveau d'une de ses extrémités libres afin de permettre l'introduction du crochet 3 de l'extincteur 2 dans la rainure 30.

Dans un exemple de réalisation, la rainure 30 est discontinue et comprend deux sous-parties 33, 34 s'étendant dans le prolongement l'une de l'autre et couvrant environ le 4/5^{e} de la largeur maximale L du socle 10. Ces sous-parties 33, 34 de la rainure 30 sont de longueur égale et débouchent toutes les deux sur la bordure périphérique 14 du socle 10. Dans le cas d'un socle 10 circulaire, la rainure 30 peut être alignée avec un diamètre du socle 10, auquel cas le socle 10 est alors symétrique.

Le socle 10 peut être obtenu soit par injection moulage d'une matière plastique, soit par usinage dans la masse (par exemple à l'aide d'une défonceuse). La matière plastique peut notamment comprendre tout polymère injectable qui résiste aux chocs et ne se déforme pas sous charge, typiquement de l'acrylonitrile butadiène styrène (ABS).

Lorsque le socle 10 est creux et obtenu par injection d'une matière plastique du type ABS, l'épaisseur (quantité de matière) de la face avant 11 et de la bordure périphérique peut être de l'ordre de 1 à 3 mm (à 5% près) pour un socle dont le diamètre est inférieur ou égal à 200 mm.

En variante, le socle 10 peut être métallique (aluminium, acier, etc.), auquel cas le socle 10 peut être obtenu de fonderie ou par emboutissage.

Chaque aimant permanent 20 peut être fixé par tout moyen sur le socle 10 par sa face arrière 12. Par exemple, chaque aimant 20 peut être fixé solidairement sur une tige filetée 31 (respectivement un téton taraudé), tandis que le socle 10 peut comprendre, au niveau de sa face arrière 12, des tétons taraudés 32 (respectivement des tiges filetées), de forme et de dimensions complémentaires. Il suffit alors de visser la tige filetée 31 des aimants permanents 20 sur un téton associé (ou inversement) afin de les solidariser avec le socle 10. En variante, les aimants 20 pourraient être fixés dans les évidements 13 par encliquetage, emboitage, etc.

Dans l'exemple de réalisation illustré sur les figures annexées, le socle 10 est circulaire et comprend, du côté de la face arrière 12, une nervure 15 circulaire centrale coaxiale avec la bordure périphérique 14 du socle 10 de laquelle s'étendent radialement quatre nervures 15 rectilignes. Les parois délimitant la rainure 30 forment un bombage qui fait saillie du côté de la face arrière 12 et participent ainsi à la rigidification du support 1. On notera qu'ici les nervures 15 s'étendent de part et d'autre des parois de la rainure 30 définissant ainsi, avec lesdites parois, six évidements 13 susceptibles de recevoir chacun un aimant permanent 20. Du fond 31 de chaque évidement 13 fait saillie un téton taraudé 32 configuré pour fixer une tige filetée 31 associée d'un aimant permanent 20.

Les aimants permanents 20 comprenant du néodyme et comprenant des ferrites peuvent être de forme et de dimensions similaires.

Par exemple, les aimants permanents 20 peuvent présenter (à 5% près) une largeur de l'ordre d'une quarantaine de millimètres, par exemple 43 mm pour une épaisseur (hors tige filetée 31 ou téton taraudé 32) de l'ordre de 12 mm. De tels aimants permanents 20 peuvent alors avoir les forces portantes et de cisaillement décrites ci-avant en relation avec les premier, deuxième et troisième exemples de réalisation, pour un encombrement réduit.

Ces aimants permanents 20 peuvent avoir toute forme susceptible d'être intégrée dans le socle 10. Par exemple, les aimants permanents 20 peuvent avoir la forme d'un disque, d'un carré, d'un triangle, etc.

Les aimants permanents 20 peuvent, de manière optionnelle, être enveloppés d'un revêtement en caoutchouc afin d'éviter de rayer, décolorer, etc. la surface sur laquelle est fixé sur le support de fixation 1.

Le support de fixation 1 peut être commercialisé préassemblé, c'est-à-dire avec des aimants permanents 20 préalablement rapportés et fixés sur le socle 10, ou en variante en kit, c'est-à-dire que le socle 10 peut être commercialisé séparément et ensuite assemblé avec des aimants permanents 20, dont au moins un comprend du néodyme.

Le nombre d'aimants permanents 20 comprenant du néodyme peut être ajusté en fonction du coût de revient choisi pour le support de fixation 1 et le type d'extincteurs 2 portatifs susceptibles d'être accroché sur le support 1. Pour un support de fixation 1 capable de porter tout type d'extincteur 2 portatif, au moins quatre aimants permanents 20 comprenant du néodyme sont de préférence fixés sur le socle 10.

Le support de fixation 1 est ensuite prêt à être fixé sur un panneau métallique 4.

Afin de fixer le support 1, il suffit d'appliquer la face arrière 12 du socle 10 contre le panneau métallique 4.

Tout type d'extincteur 2 peut alors être accroché sur le support de fixation 1 par l'intermédiaire de son crochet 3 et, comme indiqué plus haut, d'une ou deux vis 5 et d'un écrou 6 (ou tout autre organe de fixation équivalent).

## Revendications

1. Support de fixation (1) d'un extincteur (2) portatif comprenant un crochet (3), ledit Support de fixation (1) comprenant :
- un socle (10) présentant une face avant (11) configurée pour venir en contact avec le crochet (3) de l'extincteur (2) et une face arrière (12) configurée pour venir en appui contre une paroi (4), et
- au moins un aimant permanent (20) comprenant du néodyme, et
- une rainure (30), formée dans la face avant (11) du socle (10) et configurée pour coopérer avec le crochet (3) de l'extincteur (2).

2. Support de fixation (1) selon la revendication 1, comprenant au moins deux aimants permanents (20) comprenant du néodyme, par exemple entre deux et six.

3. Support de fixation (1) selon l'une des revendications 1 ou 2, dans lequel le socle (10) présente la forme d'un disque.

4. Support de fixation (1) selon l'une des revendications 1 à 3, dans lequel le socle (10) présente une largeur maximale (L) inférieure ou égale à 200 mm, de préférence inférieure ou égale à 160 mm, par exemple d'environ 155 mm.

5. Support de fixation (1) selon l'une des revendications 1 à 4, dans lequel la rainure (30) présente une section en T.

6. Support de fixation (1) selon l'une des revendications 1 à 5, dans lequel la rainure (30) est discontinue et comprend deux sous-parties (31, 32) disjointes.

7. Support de fixation (1) selon l'une des revendications 1 à 6, dans lequel le socle (10) est réalisé en matière plastique, typiquement en acrylonitrile butadiène styrène (ABS).

8. Support de fixation (1) selon l'une des revendications 1 à 7, dans lequel le socle (10) comprend en outre des nervures de rigidification (15), s'étendant depuis sa face arrière (12).

9. Support de fixation (1) selon l'une des revendications 1 à 8, comprenant en outre au moins un aimant permanant (20) comprenant des ferrites.

10. Support de fixation (1) selon l'une des revendications 1 à 8, ledit support (1) comprenant :
- entre quatre et six aimants permanents (20) comprenant du néodyme et pas d'aimant permanent comprenant des ferrites, ou
- quatre aimants permanents (20) comprenant du néodyme et deux aimants permanents comprenant des ferrites.

## Patentansprüche

1. Befestigungshalterung (1) eines tragbaren Feuerlöschers (2), umfassend einen Haken (3), wobei die Befestigungshalterung (1) umfasst:
- einen Sockel (10), aufweisend eine Vorderseite (11), die konfiguriert ist, um mit dem Haken (3) des Feuerlöschers (2) in Kontakt zu kommen, und eine Rückseite (12), die konfiguriert ist, um sich auf einer Wand (4) abzustützen, und
- mindestens einen Dauermagneten (20), umfassend Neodym, und
- eine Rille (30), ausgebildet in der Vorderseite (11) des Sockels (10) und konfiguriert, um mit dem Haken (3) des Feuerlöschers (2) zusammenzuwirken.

2. Befestigungshalterung (1) nach Anspruch 1, umfassend mindestens zwei Dauermagnete (20), umfassend Neodym, beispielsweise zwischen zwei und sechs.

3. Befestigungshalterung (1) nach einem der Ansprüche 1 oder 2, wobei der Sockel (10) die Form einer Scheibe aufweist.

4. Befestigungshalterung (1) nach einem der Ansprüche 1 bis 3, wobei der Sockel (10) eine maximale Breite (L) kleiner oder gleich 200 mm, vorzugsweise kleiner oder gleich 160 mm, beispielsweise von zirka 155 mm, aufweist.

5. Befestigungshalterung (1) nach einem der Ansprüche 1 bis 4, wobei die Rille (30) einen T-Querschnitt aufweist.

6. Befestigungshalterung (1) nach einem der Ansprüche 1 bis 5, wobei die Rille (30) diskontinuierlich ist und zwei getrennte Unterabschnitte (31, 32) aufweist.

7. Befestigungshalterung (1) nach einem der Ansprüche 1 bis 6, wobei der Sockel (10) aus Kunststoff, in typischer Weise aus Acrylnitril-Butadien-Styrol (ABS) hergestellt ist.

8. Befestigungshalterung (1) nach einem der Ansprüche 1 bis 7, wobei der Sockel (10) ferner Versteifungsrippen (15) umfasst, die sich auf seiner Rückseite (12) erstrecken.

9. Befestigungshalterung (1) nach einem der Ansprüche 1 bis 8, umfassend ferner mindestens einen Dauermagneten (20), umfassend Ferrite.

10. Befestigungshalterung (1) nach einem der Ansprüche 1 bis 8, wobei die Halterung (1) umfasst:
- zwischen vier und sechs Dauermagnete (20), umfassend Neodym, und keinen Dauermagneten, umfassend Ferrite, oder
- vier Dauermagnete (20), umfassend Neodym, und zwei Dauermagnete, umfassend Ferrite.

## Claims

1. An attachment support (1) of a portable extinguisher (2) comprising a hook (3), said attachment support comprising:
- a base (10) having a front face (11) configured to come into contact with the hook (3) of the extinguisher and a rear face (12) configured to be supported by a wall (4), and
- at least one permanent magnet (20) comprising neodymium, and
- a slot (30), formed in the front face (11) of the base (10) and configured to cooperate with the hook (3) of the extinguisher (2).

2. The attachment support (1) according to claim 1, comprising at least two permanent magnets (20) comprising neodymium, between two and six for example.

3. The attachment support (1) according to one of claims 1 or 2, wherein the base (10) has the shape of a disk.

4. The attachment support (1) according to one of claims 1 to 3, wherein the base (10) has a maximum width (L) less than or equal to 200 mm, preferably less than or equal to 160 mm, for example approximately 155 mm.

5. The attachment support (1) according to one of claims 1 to 4, wherein the slot (30) has a T-shaped cross section.

6. The attachment support (1) according to one of claims 1 to 5, wherein the slot (30) is discontinuous and comprises two disjoint sub-portions (31, 32).

7. The attachment support (1) according to one of claims 1 to 6, wherein the base (10) is made of plastic, typically of acrylonitrile butadiene styrene (ABS).

8. The attachment support (1) according to one of claims 1 to 7, wherein the base (10) also comprises stiffening ribs (15), extending from its rear face (12).

9. The attachment support (1) according to one of claims 1 to 8, also comprising at least a permanent magnet (20) comprising ferrites.

10. The attachment support (1) according to one of claims 1 to 8, said support (1) comprising:
- between four and six permanent magnets (20) comprising neodymium and no permanent magnet comprising ferrites, or
- four permanent magnets (20) comprising neodymium and two permanent magnets comprising ferrites.
